## Europäisches Patentamt
## European Patent Office
## Office européen des brevets

(11) Publication number: **0 079 944**
**B1**

(12) **EUROPEAN PATENT SPECIFICATION**

(45) Date of publication of patent specification: **25.02.87**

(21) Application number: **82902118.7**

(22) Date of filing: **21.05.82**

(86) International application number:
**PCT/US82/00697**

(87) International publication number:
**WO 82/04310 09.12.82 Gazette 82/29**

(51) Int. Cl.⁴: **G 01 B 11/00**

(54) **FIBER OPTIC INTERFEROMETER.**

(30) Priority: **26.05.81 US 266773**

(43) Date of publication of application:
**01.06.83 Bulletin 83/22**

(45) Publication of the grant of the patent:
**25.02.87 Bulletin 87/09**

(84) Designated Contracting States:
**DE FR GB**

(56) References cited:
**EP-A-0 064 789**
**DD-A- 130 803**
**GB-A-1 244 337**
**US-A-4 310 905**

**N, Applied Optics, issued 01 February 1981, F: BIEN et al, Absolute Distance Measurements By Variable Wavelength Interferometry, see Fig. 1**

(73) Proprietor: **GOULD INC.**
**10 Gould Center**
**Rolling Meadows, IL 60008 (US)**

(72) Inventor: **STOWE, David W.**
**930 Ridgefield Lane**
**Buffalo Grove, IL 60090 (US)**

(74) Representative: **Barrett, James William et al**
**A.A. THORNTON & CO. Northumberland House**
**303-306 High Holborn**
**London WC1V 7LE (GB)**

(56) References cited:
**OPTIC LETTERS, vol. 5, no. 10, October 1980, Optical Society of America, NEW YORK (US). M. IMAI et al.: "Fiber-optic Michelson interferometer using an optical power divider", pages 418-420**

**IBM TECHNICAL DISCLOSURE BULLETIN, vol. 20, no. 11A, April 1978, NEW YORK (US). M. F. GLATZEL et al.: "Temperature measurement technique using Fresnel interference technique", pages 4571-4572**

Courier Press, Leamington Spa, England.

(56) References cited:

APPLIED OPTICS, vol. 17, no. 3, February 1, 1978, Optical Society of America. J. A. BUCARO et al.: "Single fiber interferometric acoustic sensor", pages 330-331

IBM TECHNICAL DISCLOSURE BULLETIN, vo. 22, no. 1, June 1979, NEW YORK (US). L. S. SHEINER et al.: "Direct conversion of sound waves to light waves using interferometric techniques", pages 208-209

## Description

The present invention relates to optical interferometers that utilize fiber optics to direct the multiple light paths within the interferometer itself.

An interferometer is a device that utilizes light in order to make precise measurements. These measurements may include measurements from very small distances to measurements of binary star separations. Also, an interferometer can be used to determine refractive indices, measure the deformation of surfaces and measure small ultrasonic vibrations in a surface.

The prior art teaches several different configurations for interferometers. Some of the more well known configurations are the Rayleigh interferometer, the Michelson stellar interferometer, the Fabry-Perot interferometer, and the Mach-Zehnder interferometer.

For example, L. S. Sheiner et al. (IBM Technical Disclosure Bulletin, Vol. 22, No. 1, June 1979, New York, pp. 208—209) describes a Michelson type interferometer in which the reflected light from two displaced surfaces is used to determine the position of one of the surfaces. In Sheiner et al., a bundle of single fibers is used for each of the transmitting legs. In J. A. Bucaro et al. (Applied Optics, Vol. 17, No. 3, Feb. 1, 1968; Optical Society of America), a single fiber optic interferometer measures the back reflected optical beam out of the input end of a single fiber optic waveguide. Bucaro et al. suggests coating the end of the fiber to increase the reflection coefficient. While the foregoing two examples rely on the direct combination of reflected and transmitted light in one or more fibers, Drenckhan (East German Patent DD—A—130,803,) uses, and M. Imai et al. ("Fibre-optic Michelson interferometer using an optical power divider"), Optics Letters, Volume 5, Number 10 appears to use evanescent wave coupling to combine the transmitted light which has been split into two or more paths, with the reflected light.

According to the present invention there is provided an interferometer for measuring displacements of a surface to be measured, comprising:

an optical energy source;

a first fiber optic waveguide having a finite length with a first end a second end, light from said optical energy source entering said first and end of said first fiber optic waveguide and being transmitted to said second end of said first fiber optic waveguide, said second end internally reflecting at least a portion of the light back towards said first end of said first fiber optic waveguide and projecting the remainder of said light forwards and out of said first waveguide; and

a second fiber optic waveguide having a finite length with a first end and a second end;

said first and second fiber optic waveguides being in juxtaposition such that evanescent wave coupling occurs between their respective cores over a predetermined length (L);

said second end of said first fiber optic waveguide being in such spatial relationship with said surface to be measured that said projected light strikes said surface and reflects therefrom with at least a portion of said reflected light from said surface entering said second end of said first fiber optic waveguide and combining with said internally reflected light from said first fiber optic waveguide thus defining an optical information wave, said optical information wave being evanescently coupled to said second fiber optic waveguide such that said optical information wave is transmitted to said second end of said second fiber optic waveguide; characterised by an optical energy absorber fixedly attached to said first end of said second fiber optic waveguide to prevent internal back reflection within said second fiber optic waveguide.

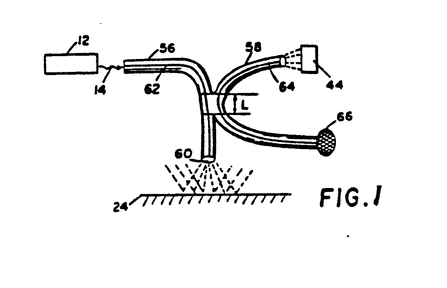

In the accompanying drawing, the single Figure 1 is a generally schematic diagram of one embodiment of the present invention.

A description of the invention follows referring to the drawing. In general, the term "optical waveguide" or "fiber optic waveguide" will be used herein to refer to a glass transmission line having a core member with cladding members concentrically surrounding the core for transmission by internal reflection at the core-clad interface of electromagnetic radiation which lies in the optical portion of the electromagnetic spectrum between microwaves and x-rays and including the ultra-violet, visible and infra-red regions.

In the interferometer shown in the drawing, a light source 12 preferably a monochromatic light source such as a laser directs a beam of light 14 toward a first fiber optic waveguide 56 which carries the incoming parallel light beam 14 through its core 62 to end surface 60.

A reference beam is derived within fiber optic waveguide 62 by back reflection at the surface 60. Such reflection occurs naturally due to the difference in the refractive index between the glass core and the air. Back reflection can be enhanced by placing a partially reflecting layer at the end surface 60 of fiber optic waveguide 62. A finite amount of optical energy will pass through surface 60 and will project upon a surface 24 to be measured. A quantitative amount of light reflected off surface 24 will again enter fiber optic 62 at surface 60 and will combine with the initial reference back reflection beam discussed supra.

Fiber optic waveguide 56 is in juxtaposition with a second fiber optic waveguide 58 so as to have evanescent coupling over a finite length L. The light emerging from surface 60 of fiber optic waveguide 56 is received back only through fiber optic waveguide 56. Therefore the signal travelling back up through core 62 of fiber optic waveguide 56 carries the combined signal of both the back reflection signal off of surface 60 and the reflected signal off of surface 24. This combined signal is then evanescently wave coupled to core 64 of fiber optic 58. An absorber 66 is placed at one end of fiber optic 58 in order to eliminate end reflections in the fiber optic 58. The combined signal is again projected from fiber optic waveguide 58 to a detection or analyzing device 44.

One contemplative measurement that can be made of surface 24 is surface vibrations. The optical energy received by device 44 will vary in intensity as a function of the surface vibrations of surface 24. Fiber optic 58 defines the detecting leg of the interferometer, which is substantially insensitive to the ambient environment fluctuations since the reference signal and the reflected light travel through the same fiber optic waveguide. Also the evanescent wave coupling action between the two fibers also eliminates phase noise caused by motion sensitivity between the light paths. Critical alignment of the interferometer itself is also eliminated.

The present invention is useful when the amount of reflected light off of surface 24 is of sufficient intensity to provide sufficient measurement information and has proved to have sufficient sensitivity as to observe displacements of $5 \times 10^{-7}$ centimeters with no spectral analysis or narrow band filtering. Displacements of the order of $10^{-9}$ centimeters could be easily detected by using spectral analysis.

This invention has been described with reference to a preferred embodiment. Obvious modifications and alterations will occur to others upon reading and understanding the specification. The intent is to include all such modifications and alterations insofar as they come within the scope of the appended claims.

## Claims

1. An interferometer for measuring displacements of a surface (24) to be measured, comprising:

an optical energy source (12);

a first fiber optic waveguide (56) having a finite length with a first end and a second end, light (14) from said optical energy source (12) entering said first end of said first fiber optic waveguide (56) and being transmitted to said second end of said first fiber optic waveguide, said second end internally reflecting at least a portion of the light back towards said first end of said first fiber optic waveguide and projecting the remainder of said light forwards and out of said first waveguide; and

a second fiber optic waveguide (58) having a finite length with a first end and a second end;

said first and second fiber optic waveguides being in juxtaposition such that evanescent wave coupling occurs between their respective cores (62, 64) over a predetermined length (L);

said second end of said first fiber optic waveguide (56) being in such spatial relationship with said surface (24) to be measured that said projected light strikes said surface (24) and reflects therefrom with at least a portion of said reflected light from said surface entering said second end of said first fiber optic waveguide (56) and combining with said internally reflected light from said first fiber optic waveguide thus defining an optical information wave, said optical information wave being evanescently coupled to said second fiber optic waveguide (58) such that said optical information wave is transmitted to said second end of said second fiber optic waveguide (58); characterised by an optical energy absorber (66) fixedly attached to said first end of said second fiber optic waveguide to prevent internal back reflection within said second fiber optic waveguide.

2. The interferometer of claim 1 wherein said second end of said first fiber optic waveguide has a specific amount of reflective matter attached thereto in order to enhance the degree of internal reflection.

## Patentansprüche

1. Ein Interferometer zur Messung von Lage-Änderungen einer zu überwachenden Oberfläche (24),

mit einer optische Energie liefernde Energiequelle (12),

mit einem ersten Lichtleiter (56) von definierter Länge zwischen einem ersten Ende und einem zweiten Ende, wobei Licht (14) aus der optischen Energiequelle (12) über das erste Ende in den ersten Lichtleiter (56) eintritt und innerhalb des ersten Lichtleiters (56) zu dessen zweitem Ende übertragen wird,

wobei das zweite Ende — innerhalb des ersten Lichtleiters — wenigstens einen Teil des Lichtes zurück zum ersten Ende des ersten Lichtleiters reflektiert und das restliche Licht nach vorne aus dem ersten Lichtleiter austreten läßt;

ferner mit einem zweiten Lichtleiter (58) von definierter Länge zwischen einem ersten Ende und einem zweiten Ende,

wobei die beiden Lichtleiter in Juxtaposition angeordnet sind, so daß eine gedämpfte Wellenkopplung über eine vorgegebene Länge (L) der jeweiligen Kerne (62, 64) des ersten und des zweiten Lichtleiters auftritt, wobei das zweite Ende des ersten Lichtleiters (56) eine solche räumliche Lage bezüglich der zu überwachenden Oberfläche (24) einnimmt, daß das austretende Licht auf die Oberfläche (24) fällt und von dort reflektiert wird, wobei zumindest ein Teil des an der Oberfläche reflektierten Lichtes wieder über das zweite Ende in den ersten Lichtleiter (56) eintritt und dort mit dem innerhalb des ersten Lichtleiters reflektierten Licht kombiniert wird, wobei eine, eine Information tragende optische Welle definiert wird, welche gedämpft mit dem zweiten Lichleiter (58) gekoppelt wird, so daß diese eine optische Information tragende Welle zum zweiten Ende des zweiten Lichtleiters (58) übertragen wird, dadurch gekennzeichnet, daß

am ersten Ende des zweiten Lichleiters (58) ein Absorber (66) für optische Energie fest angebracht ist, um eine Rück-Reflektion innerhalb des zweiten Lichtleiters (58) zu verhindern.

2. Das Interferometer nach Anspruch 1, dadurch gekennzeichnet, daß am zweiten Ende des ersten Lichtleiters (56) eine bestimmte Menge an reflektierendem Material angebracht ist, um den Grad der Reflektion innerhalb des Lichtleiters zu verstärken.

**Revendications**

1. Un interféromètre destiné à mesurer des déplacements d'une surface (24) à mesurer, comprenant:

une source d'énergie optique (12);

un premier guide d'onde à fibre optique (56) ayant une longueur finie, avec une première extrémité et une seconde extrémité, la lumière (14) provenant de la source d'énergie optique (12) entrant par la première extrémité du premier guide d'onde à fibre optique (56) et étant transmise vers la seconde extrémité du premier guide d'onde à fibre optique, cette seconde extrémité réfléchissant de façon interne au moins une partie de la lumière en arrière vers la première extrémité du premier guide d'onde à fibre optique, et projetant le reste de la lumière vers l'avant et hors du premier guide d'onde; et

un second guide d'onde à fibre optique (58) ayant une longueur finie avec une première extrémité et une seconde extrémité;

les premier et second guides d'ondes à fibre optique étant juxtaposés de façon qu'un couplage par onde évanescente se produise entre leurs coeurs respectifs (62, 64) sur une longueur prédéterminée (L);

la seconde extrémité du premier guide d'onde à fibre optique (56) ayant une relation spatiale par rapport à la surface (24) à mesurer, telle que la lumière projetée tombe sur ladite surface (24) et se réfléchisse sur celle-ci, une partie au moins de la lumière réfléchie sur la surface entrant par la seconde extrémité du second guide d'onde à fibre optique (56) et se combinant avec la lumière réfléchie de façon interne qui provient du premier guide d'onde à fibre optique, ce qui définit une onde d'information optique, cette onde d'information optique étant transmise par couplage évanescent vers le second guide d'onde à fibre optique (58), de façon que l'onde d'information optique soit transmise vers la seconde extrémité du second guide d'onde à fibre optique (58); caractérisé par un élément absorbant d'énergie optique (66) disposé de façon fixe sur la première extrémité du second guide d'onde à fibre optique, pour empêcher une rétroréflexion interne à l'intérieur du second guide d'onde à fibre optique.

2. L'interféromètre selon la revendication 1, dans lequel une quantité spécifique de matière réfléchissante est fixée sur la seconde extrémité du premier guide d'onde à fibre optique dans le but d'augmenter le degré de réflexion interne.

FIG.1